# EUROPÄISCHE PATENTSCHRIFT

(11) **EP 0 638 008 B1**
(45) Veröffentlichungstag und Bekanntmachung des Hinweises auf die Patenterteilung: **04.09.1996**
(21) Anmeldenummer: 94909022.9
(22) Anmeldetag: 23.02.1994
(51) Int. Cl.: B23K 26/10, B23K 26/02

(54) **VERFAHREN UND VORRICHTUNG ZUM LASERSCHWEISSEN**
LASER-WELDING METHOD AND DEVICE
PROCEDE ET DISPOSITIF DE SOUDAGE AU LASER

(30) Priorität: 26.02.1993 DE 9302850 U
(43) Veröffentlichungstag der Anmeldung: 15.02.1995
(73) Patentinhaber: KUKA Schweissanlagen & Roboter GmbH, D-86165 Augsburg (DE)
(72) Erfinder: ZINKE, Karl-Heinz, D-86163 Augsburg (DE)
(74) Vertreter: Ernicke, Hans-Dieter, Dipl.-Ing.
(86) Internationale Anmeldenummer: EP9400507
(87) Internationale Veröffentlichungsnummer: WO9419142

(56) Entgegenhaltungen:
- EP-A- 0 480 293
- US-A- 4 973 817

## Beschreibung

Die Erfindung betrifft ein Verfahren und eine Vorrichtung zum Laserschweißen mit den Merkmalen im Oberbegriff des Anspruchs 1 bzw. 5.

In der Praxis sind Laserschweißvorrichtungen bekannt, die eine Schweißenergiequelle und eine bewegliche Spanneinrichtung aufweisen. Die Schweißenergie wird in Abhängigkeit von der Werkstückdicke eingestellt. Die Eingabe erfolgt anhand der vorgegebenen Parameter. Der Bediener weiß aus den Bauteilvorgaben, wie groß die einzelne Blechdicke ist. Er berechnet hieraus die Dicke des Blechpaketes und stellt anhand vorgegebener Tabellen danach die Schweißenergiequelle von Hand ein. Diese Technik ist für eine Automatisierung nicht geeignet. Sie ist außerdem toleranz- und fehlerbehaftet.

Es ist Aufgabe der vorliegenden Erfindung, eine Möglichkeit zur besseren und genaueren Einstellung der Laserschweißvorrichtung aufzuzeigen.

Die Erfindung löst diese Aufgabe mit den Merkmalen der Ansprüche 1 und 5.
Erfindungsgemäß wird über die Spanneinrichtung der Zustellweg mittels eines Weggebers abgegriffen und hieraus mit einer geeigneten Steuerung die Dicke des Blechpaketes exakt berechnet. Mit diesem Dickenwert kann die Schweißenergiequelle genau eingestellt werden. Diese Einstellung kann auch von Hand erfolgen, wobei der Bediener die Dicke des Blechpaketes von der Steuerung an einer Anzeige gemeldet bekommt. Der Vorteil besteht in einer exakten Blechdickenerfassung, die zudem mit einer geeigneten Spannvorrichtung direkt an der Schweißstelle erfolgen kann. Rechenfehler des Bedieners bei der Blechdickenaddition sind ausgeschlossen. Auch etwaige Toleranzen in den einzelnen Blechdicken werden genau erfaßt.

In der besonders vorteilhaften Ausführungsform ist die Steuerung mit der Schweißenergiequelle verbunden. Bei einer geeigneten Auslegung der Steuerung kann die benötigte Schweißenergie dadurch automatisch und unter Berücksichtigung anderer gespeicherter Schweißparameter eingestellt werden.

Der Weggeber ist an der Spanneinrichtung angeordnet, was auf unterschiedliche Weise möglich ist. Desgleichen gibt es auch unterschiedliche Möglichkeiten für die Gestaltung des Weggebers. Für eine automatisierte Laserschweißvorrichtung empfiehlt es sich, die Spanneinrichtung mit einem motorischen Antrieb zu versehen und den Weggeber am Antrieb anzuordnen. Günstigerweise handelt es sich dabei um einen Drehwinkelmesser im Motor.

In einer anderen Ausführungsform kann der Weggeber auch den Spannelementen, insbesondere Spannzangen, zugeordnet sein und deren gegenseitige Annäherung messen. Dies ist einerseits direkt an den Zangenarmen möglich. Man kann aber auch ein Getriebe, insbesondere ein Zahnstangengetriebe oder einen Spindeltrieb zur synchronen Betätigung der Zangenarme vorsehen und den Weggeber dann am gemeinsamen Ritzel bzw. der Spindel anordnen.

Als Weggeber können jegliche Arten von Meßelementen eingesetzt werden, die einen zurückgelegten Weg unmittelbar oder auch mittelbar über andere physikalische Effekte messen.

Für die Laserschweißvorrichtung empfiehlt es sich, den Schweißkopf, insbesondere den Laserfocus eines Laserschweißgerätes, an einem der Zangenarme zu führen und beim Schließen der Spannvorrichtung automatisch in die Schweißposition zuzustellen. Nach dem Schließen der Spannvorrichtung ist die Schweißvorrichtung dann sofort betriebsbereit und richtig eingestellt. Der Einricht- und Einstellvorgang kann an jeder Schweißstelle neu wiederholt werden, so daß auch Unregelmäßigkeiten im Schweißgut erfaßt werden und dadurch stets eine optimierte Schweißung erlauben.

In den Unteransprüchen sind weitere vorteilhafte Ausgestaltungen der Erfindung angegeben.

Die Erfindung ist in den Zeichnungen beispielsweise und schamtisch dargestellt. Im einzelnen zeigen
- Figur 1:: eine Laserschweißvorrichtung in schematischer Seitenansicht und
- Figur 2:: eine Darstellung der Spannzangen mit Weggeber und
- Figur 3:: eine Alternative zu Figur 2 mit einem Spindeltrieb

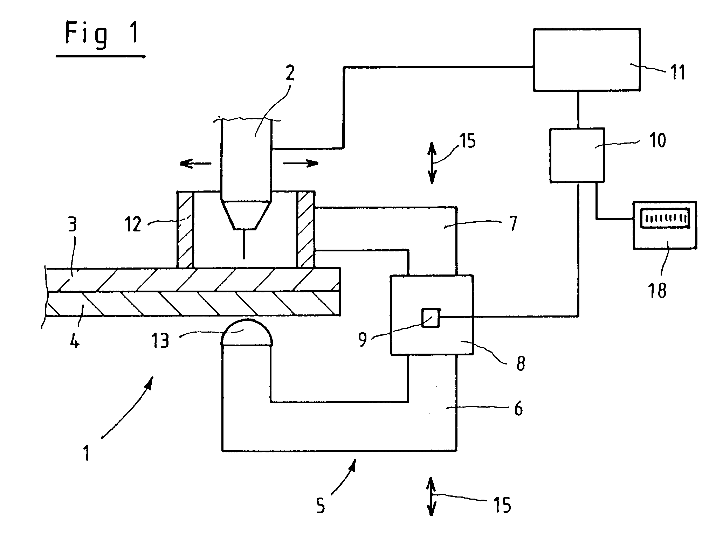

Figur 1 zeigt schematisch eine Laserschweißvorrichtung (1), die zum Schweißen von zwei oder mehr aneinander oder aufeinander liegenden Blechen (3,4) dient. Die Bleche (3,4) werden mit einer Spannvorrichtung (5) zusammengepreßt. Die Spannvorrichtung (5) kann zusätzlich den Schweißkopf (2) des Schweißgerätes führen und positionieren. Diese Funktion muß allerdings nicht unbedingt erfüllt sein.

Im dargestellten Ausführungsbeispiel besitzt die Laserschweißvorrichtung (1) ein Laserschweißgerät mit einer einstellbaren Schweißenergiequelle (11). Der Schweißkopf (2) ist hier als Laserfocus ausgebildet. Die zugeführte Schweißenergie richtet sich unter anderem nach der Dicke des Blechpaketes (3,4) und muß entsprechend an der Schweißenergiequelle (11) eingestellt werden.

Die Spannvorrichtung (5) ist in der Lage, die Dicke des Blechpaketes (3,4) beim Spannvorgang selbsttätig zu ermitteln. Sie weist hierzu einen Weggeber (9) auf, der mit einer geeigneten Steuerung (10) verbunden ist. Der Weggeber (9) mißt den Zustellweg der Spannelemente, die in Figur 1 beispielsweise als zwei Zangenarme (6,7) ausgebildet sind, ansonsten aber auch eine beliebige andere Gestalt haben können.

Der Zustellweg wird vom Weggeber (9) an die Steuerung (10) gemeldet, die hieraus anhand der vorbekannten Ausgangspositionen der Spannelemente die Dicke des Blechpaketes (3,4) errechnet. In der einfachsten Ausführungsform kann die Steuerung (10) als Summationsschaltung ausgebildet sein. Sie kann auch mit dem Weggeber (9) kombiniert an der Spannvorrichtung (5) angeordnet sein. In der bevorzugten Ausführungsform ist die Steuerung (10) allerdings als hochintegrierte Schaltung mit einem Mikroprozessor und verschiedenen Datenspeichern ausgebildet.

Die Steuerung (10) gibt den berechneten Wert für die Dicke des Blechpaketes (3,4) aus. Dies kann durch eine optische Anzeige (18) geschehen, an der ein Bediener den Dickenwert abliest und die benötigte Schweißenergie an der Schweißenergiequelle (11) von Hand einstellt. Bei der Einstellung besteht die Möglichkeit, auch noch andere, den Schweißvorgang beeinflussende Parameter zu berücksichtigen.

In der bevorzugten Ausführungsform ist die Steuerung (10) mit der Schweißenergiequelle (11) verbunden. Die Steuerung (10) kann so ausgelegt sein, daß sie die gesamte Laserschweißvorrichtung (1) steuern kann. Sie stellt dann anhand der ermittelten Dicke des Blechpaketes (3,4) die benötigte Schweißenergie selbsttätig ein, wobei wie bei der Handeinstellung auch andere Parameter Berücksichtigung finden können. Die den Laserschweißvorgang beeinflussenden Parameter sind z.B. in den vorerwähnten Datenspeichern abgelegt oder können je nach Laserschweißprozeß bzw. Laserschweißvorrichtung (1) auch anhand anderer, im Schweißprozeß ermittelter Daten berechnet werden.

Der Weggeber (9) kann unterschiedlich ausgebildet sein und auf unterschiedliche Weise an der Spannvorrichtung (5) angeordnet sein.

In Figur 1 ist für die Zangenarme (6,7) ein motorischer Antrieb (8) vorgesehen, der die Zangenarme (6,7) in der durch Pfeile angedeuteten Bewegungsrichtung (15) an die Bleche (3,4) zustellt und wieder entfernt. Der motorische Antrieb (8) kann einen Elektromotor, einen pneumatischen oder hydraulischen Zylinder oder sonstige Antriebselemente enthalten. Der Weggeber (9) ist dem Motor zugeordnet und im Falle eines Elektromotors beispielsweise als auf der Motorachse sitzender Drehwinkelgeber ausgebildet.

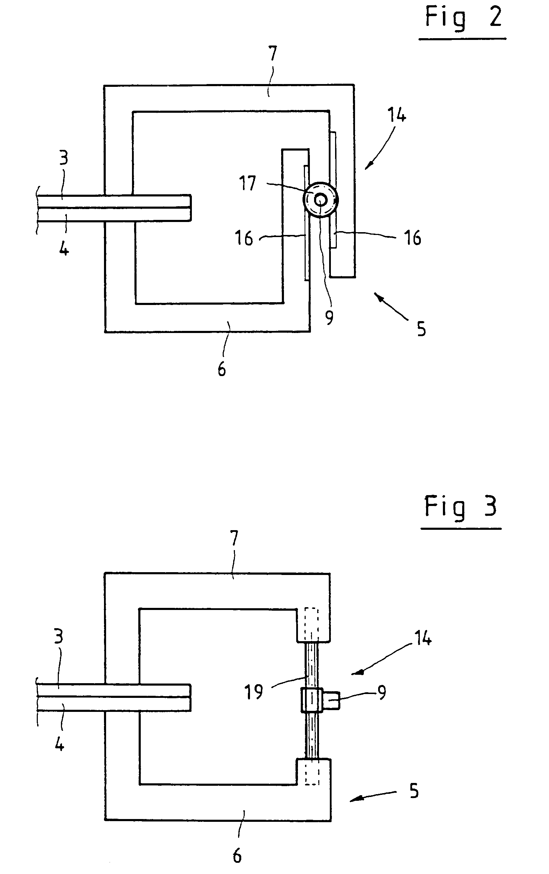

Figur 2 und 3 zeigen eine Alternative, die auch für eine Handbetätigung der Spannvorrichtung (5) einsetzbar ist. Die Zangenarme (6,7) sind durch ein gemeinsames Getriebe (14) gekoppelt, mit dem sie synchron aufeinander zu und voneinander weg bewegt werden. Der Weggeber (9) sitzt dann am Getriebe (14).

Das Getriebe (14) ist in Figur 2 als Zahnstangengetriebe ausgebildet. Der Antrieb erfolgt über ein gemeinsames Ritzel (17), das mit zwei auf gegenüberliegenden Seiten angeordneten Zahnstangen (16) an den Zangenarmen (6,7) kämmt. Der Drehgeber (9) sitzt am Ritzel (17) bzw. an dessen Achse. Er ist beispielsweise als Potentiometer ausgebildet, der die Drehbewegung in ein elektrisches Signal in Form einer Widerstandsänderung umsetzt.

Figur 3 zeigt eine andere Bauform für das Getriebe (14) in Gestalt eines Spindeltriebs (19). Die Spindel hat zwei gegenläufige Gewindeabschnitte, von denen jeder mit einem Gegengewinde im zugeordneten Zangenarm (6,7) kämmt. Die Spindel wird durch einen nicht näher dargestellten Antrieb betätigt. Der Weggeber (9) sitzt an der Spindel und mißt deren Drehweg. Abweichend kann er sich auch am Antrieb befinden.

Der Weggeber (9) kann auch in anderer Weise ausgebildet sein, z.B. als berührungsloser Sensor, der den Abstand zwischen den Zangenarmen (6,7) mißt. Er kann auch mit den Zangenarmen (6,7) direkt gekoppelt sein und deren Bewegung unmittelbar erfassen. Er kann hierzu beispielsweise die Relativbewegung zwischen den Zangenarmen (6,7) oder die absolute Zustellbewegung der Zangenarme (6,7) von einer vorgegebenen Ausgangsposition, z.B. einem Anschlag, aus messen. Der Weggeber (9) kann dazu auch aus mehreren Meßelementen bestehen. Diese Ausführung bietet sich für eine Spanneinrichtung (5) mit unabhängig voneinander angetriebenen und zugestellten Spannzangen (6,7) oder sonstigen Formen von Spannelementen an. Beispielsweise können dies zwei oder mehr durch Zylinder einzeln angetriebene Spannbacken sein

Der Weggeber (9) ist vorzugsweise als ein den Weg direkt erfassendes Meßelement ausgebildet. Er kann aber auch als indirekt meßendes Element ausgebildet sein, das den Weg beispielsweise über eine Änderung der Kraft, des Magnetflusses in einem Luftspalt oder auf der Basis sonstiger physikalischer Effekte mißt.

Die Spannvorrichtung (5) kann an beliebiger Stelle der Bleche (3,4) angesetzt werden. Im bevorzugten Ausführungsbeispiel der Figur 1 greift die Spannvorrichtung (5) direkt an der Schweißstelle an. Der obere Zangenarm (7) trägt am freien Ende einen im wesentlichen ring- oder gabelförmigen Druckstempel (12), der zugleich die Fassung oder Führung für den integrierten Schweißkopf (2) darstellt. Der Druckstempel ist vorzugsweise als kreisrunder Rohrabschnitt ausgebildet, in den der Schweißkopf (2), hier ein Laserfocus, im wesentlichen zentrisch greift. Innerhalb des stehenden Rohrabschnitts kann der Schweißkopf (2) noch beweglich gelagert sein. Es empfiehlt sich jedoch, den Schweißkopf (2) derart auf den Druckstempel (12) einzustellen, daß mit der Anlage des Druckstempels (12) am Blechpaket (3,4) zugleich auch der Schweißkopf (2) in schweißgerechter Lage positioniert ist.

Die andere Schweißzange (6) trägt als Gegenhalter ebenfalls einen Druckstempel (13), der hier als abgerundete Leiste oder als Halbkugelabschnitt ausgebildet ist. Der Druckstempel (13) liegt an der Spannstelle dem anderen Druckstempel (12) zentrisch gegenüber und befindet sich vorzugsweise in der Flucht mit der Schweißstelle bzw. mit dem Laserstrahl.

### BEZUGSZEICHENLISTE

- 1: Laserschweißvorrichtung
- 2: Schweißkopf, Laserfokus
- 3: Blech
- 4: Blech
- 5: Spanneinrichtung
- 6: Zangenarm
- 7: Zangenarm
- 8: Antrieb
- 9: Weggeber
- 10: Steuerung
- 11: Schweißenergiequelle
- 12: Druckstempel
- 13: Druckstempel
- 14: Getriebe
- 15: Bewegungsrichtung
- 16: Zahnstange
- 17: Ritzel
- 18: Anzeige
- 19: Spindeltrieb

## Patentansprüche

1. Verfahren zum Laserschweißen von aneinanderliegenden Blechen (3,4) mit einer beweglichen Spanneinrichtung (5) und einer Schweißenergiequelle (11), dadurch **gekennzeichnet**, daß beim Schließen der Spanneinrichtung (5) der Zustellweg gemessen und hieraus die Dicke des Blechpakets (3,4) berechnet und ausgegeben wird, wobei nach dem gemessenen Blechdickenwert die Schweißenergie eingestellt wird.

2. Verfahren nach Anspruch 1, dadurch **gekennzeichnet**, daß die Meßwerte der Spanneinrichtung (5) an eine automatische Steuerung (10) gemeldet werden, die die Dicke des Blechpakets (3,4) sowie die benötigte Schweißenergie berechnet und die Schweißenergie an der Schweißenergiequelle (11) einstellt.

3. Verfahren nach Anspruch 1 oder 2, dadurch **gekennzeichnet**, daß das Blechpaket (3,4) im Bereich der Schweißstelle gespannt wird.

4. Verfahren nach Anspruch 1 oder einem der folgenden, dadurch **gekennzeichnet**, daß mit der Spanneinrichtung (5) der integrierte und als Laserfokus ausgebildete Schweißkopf (2) zugestellt wird.

5. Vorrichtung zum Laserschweißen von aneinanderliegenden Blechen (3,4) mit einer beweglichen Spanneinrichtung (5)und einer Schweißenergiequelle (11), dadurch **gekennzeichnet**, daß die Spanneinrichtung (5) einen Weggeber (9) mit einer Steuerung (10) aufweist, wobei der Weggeber (9) den Zustellweg der Spanneinrichtung (5) mißt und die Steuerung hieraus die Dicke des Blechpakets (3,4) berechnet und ausgibt.

6. Vorrichtung nach Anspruch 5, dadurch **gekennzeichnet**, daß die Steuerung (10) mit einer Anzeige (18) verbunden ist.

7. Vorrichtung nach Anspruch 5 oder 6, dadurch **gekennzeichnet**, daß die Steuerung (10) mit der Schweißenergiequelle (11) verbunden ist und entsprechend der gemessenen Dicke des Blechpakets (3,4) die Schweißenergiequelle (11) einstellt.

8. Vorrichtung nach Anspruch 5 oder einem der folgenden, dadurch **gekennzeichnet**, daß die Spanneinrichtung (5) einen motorischen Antrieb (8) aufweist, an dem der Weggeber (9) angeordnet ist.

9. Vorrichtung nach einem der Ansprüche 5 bis 7, dadurch **gekennzeichnet**, daß die Spanneinrichtung (5) zangenförmig ausgebildet ist, wobei der Weggeber (9) an den Zangenarmen (6,7) angeordnet ist.

10. Vorrichtung nach Anspruch 9, dadurch **gekennzeichnet**, daß die Zangenarme (6,7) durch ein Getriebe (14) gekoppelt sind, wobei der Weggeber (9) am Getriebe (14) sitzt.

11. Vorrichtung nach Anspruch 10, dadurch **gekennzeichnet**, daß das Getriebe (14) als Zahnstangentrieb (16,17) oder als Spindeltrieb (19) ausgebildet ist.

12. Vorrichtung nach Anspruch 5 oder einem der folgenden, dadurch **gekennzeichnet**, daß der Weggeber (9) als Drehwinkelmesser ausgebildet ist.

13. Vorrichtung nach Anspruch 5 oder einem der folgenden, dadurch **gekennzeichnet**, daß der Schweißkopf (2) als Laserfokus ausgebildet und in die Spannvorrichtung (5) integriert ist.

14. Vorrichtung nach Anspruch 13, dadurch **gekennzeichnet**, daß der Schweißkopf (2) an einem endseitigen, rohrförmigen Druckstempel (12) geführt und zustellbar ist.

15. Vorrichtung nach Anspruch 5 oder einem der folgenden, dadurch **gekennzeichnet**, daß die Spanneinrichtung (5) an der Schweißstelle angreift.

## Claims

1. A process for laser-welding mutually adjacent metal sheets (3, 4), having a movable clamping device (5) and a welding energy source (11), characterized in that, with the clamping device (5) closed, the feed travel is measured and from this the thickness of the sheet stack (3, 4) is calculated and output, the welding energy being adjusted according to the measured value for the sheet thickness.

2. A process according to Claim 1, characterized in that the measured values for the clamping device (5) are signalled to an automatic control (10) which calculates the thickness of the sheet stack (3, 4) and the necessary welding energy, and adjusts the welding energy at the welding energy source (11).

3. A process according to Claim 1 or 2, characterized in that the sheet stack (3, 4) is clamped in the region of the welding point.

4. A process according to Claim 1 or one of the following claims, characterized in that the integrated welding head (2), which is constructed to be the laser focal point, is advanced with the clamping device (5).

5. A device for laser welding mutually adjacent metal sheets (3, 4), having a movable clamping device (5) and a welding energy source (11), characterized in that the clamping device (5) has a position sensor (9) with a control (10), the position sensor (9) measuring the feed travel of the clamping device (5) and from this the control calculating and outputting the thickness of the sheet stack (3, 4).

6. A device according to Claim 5, characterized in that the control (10) is connected to a display means (18).

7. A device according to Claim 5 or 6, characterized in that the control (10) is connected to the welding energy source (11) and adjusts the welding energy source (11) in accordance with the measured thickness of the sheet stack (3, 4).

8. A device according to Claim 5 or one of the following claims, characterized in that the clamping device (5) has a motor drive (8) on which the position sensor (9) is arranged.

9. A device according to one of Claims 5 to 7, characterized in that the clamping device (5) is constructed to be pincer-shaped, the position sensor (9) being arranged on the pincer arms (6, 7).

10. A device according to Claim 9, characterized in that the pincer arms (6, 7) are linked by way of a gear (14), the position sensor (9) being seated on the gear (14).

11. A device according to Claim 10, characterized in that the gear (14) is constructed as a rack-and-pinion gear (16, 17) or as a spindle gear (19).

12. A device according to Claim 5 or one of the following claims, characterized in that the position sensor (9) is constructed as a measuring device for angles of rotation.

13. A device according to Claim 5 or one of the following claims, characterized in that the welding head (2) is constructed to be the laser focal point and is integrated in the clamping device (5).

14. A device according to Claim 13, characterized in that the welding head (2) is guided on a terminal tubular pressure piston (12) and may be advanced thereon.

15. A device according to Claim 5 or one of the following claims, characterized in that the clamping device (5) is applied to the welding point.

## Revendications

1. Procédé de soudage au laser de tôles (3, 4) disposées l'une contre l'autre, par un dispositif de serrage (5) mobile et une source d'énergie de soudage (11), caractérisé en ce que, lors de la fermeture du dispositif de serrage (5), on mesure la course d'approche et, sur cette base, on calcule et on sort l'épaisseur du paquet de tôles (3, 4), l'énergie de soudage étant réglée en fonction de la valeur mesurée de l'épaisseur des tôles.

2. Procédé selon la revendication 1, caractérisé en ce que l'on communique les valeurs mesurées du dispositif de serrage (5) à une commande automatique (10), qui calcule l'épaisseur du paquet de tôles (3, 4) ainsi que l'énergie de soudage nécessaire, et qui règle l'énergie de soudage sur la source d'énergie de soudage (11).

3. Procédé selon la revendication 1 ou 2, caractérisé en ce que l'on serre le paquet de tôles (3, 4) dans la zone du point de soudage.

4. Procédé selon la revendication 1 ou l'une des suivantes, caractérisé en ce que l'on approche la tête de soudage (2), intégrée et réalisée en tant que point focal du laser par le dispositif de serrage (5).

5. Dispositif destiné au soudage au laser de tôles (3, 4) l'une contre l'autre comportant un dispositif de serrage (5) mobile et une source d'énergie de soudage (11), caractérisé en ce que le dispositif de serrage (5) présente un capteur de course (9) ayant une commande (10), le capteur de course (9) mesurant la course d'approche par le dispositif de serrage (5) et la commande calculant, sur cette base, l'épaisseur du paquet de tôles (3, 4) et la sortant.

6. Dispositif selon la revendication 5, caractérisé en ce que la commande (10) est reliée à un indicateur (18).

7. Dispositif selon la revendication 5 ou 6, caractérisé en ce que la commande (10) est reliée à la source d'énergie de soudage (11) et en ce qu'elle règle la source d'énergie de soudage (11) en fonction de l'épaisseur mesurée du paquet de tôles (3, 4).

8. Dispositif selon la revendication 5 ou l'une des suivantes, caractérisé en ce que le dispositif de serrage (5) présente un entraînement par moteur (8), sur lequel est placé le capteur de course (9).

9. Dispositif selon l'une des revendications 5 à 7, caractérisé en ce que le dispositif de serrage (5) est réalisé en forme de pince, le capteur de course (9) étant placé sur les branches de pince (6, 7).

10. Dispositif selon la revendication 9, caractérisé en ce que les branches de pince (6, 7) sont couplées par un engrenage (14), le capteur de course (9) étant placé sur l'engrenage (14).

11. Dispositif selon la revendication 10, caractérisé en ce que l'engrenage (14) est réalisé sous la forme d'un engrenage à crémaillère (16, 17) ou sous celle d'une commande par broche (19).

12. Dispositif selon la revendication 5 ou l'une des suivantes, caractérisé en ce que le capteur de course (9) est réalisé sous la forme d'un élément de mesure d'angle de rotation.

13. Dispositif selon la revendication 5 ou l'une des suivantes, caractérisé en ce que la tête de soudage (2) est réalisée en tant que point focal du laser et en ce qu'elle est intégrée au dispositif de serrage (5).

14. Dispositif selon la revendication 13, caractérisé en ce que la tête de soudage (2) est guidée dans un poinçon (12) tubulaire, du côté extrémité, et en ce qu'elle peut être avancée.

15. Dispositif selon la revendication 5 ou l'une des suivantes, caractérisé en ce que le dispositif de serrage (5) vient s'appliquer au point de soudage.
